Europäisches Patentamt

European Patent Office

Office européen des brevets

(19)

(11) Publication number: **0 221 449 B1**

# EUROPEAN PATENT SPECIFICATION

(12)

(45) Date of publication of patent specification: **20.02.91**  (51) Int. Cl.⁵: **H01B 7/34**

(21) Application number: **86114655.3**

(22) Date of filing: **22.10.86**

(54) **Electric cable and the material used for covering the electrical conductors acting as insulation and/or sheath.**

(30) Priority: **31.10.85 IT 2269385**

(43) Date of publication of application:
**13.05.87 Bulletin 87/20**

(45) Publication of the grant of the patent:
**20.02.91 Bulletin 91/08**

(84) Designated Contracting States:
**DE FR GB**

(56) References cited:
**GB-A- 1 479 083**
**GB-A- 2 163 167**
**US-A- 4 098 762**

(73) Proprietor: **SOCIETA' CAVI PIRELLI S.p.A.**
**Piazzale Cadorna 5**
**I-20123 Milano(IT)**

(72) Inventor: **Secco, Alessandro**
**Via Roma, 118**
**Bareggio (Milan)(IT)**
Inventor: **Zaopo, Antonio**
**Via Ciceri Visconti, 10**
**Milan(IT)**
Inventor: **Anelli, Pietro**
**Via L. della Pila, 61**
**Milan(IT)**

(74) Representative: **Sirtori, Giorgio et al**
**Pirelli S.p.A. Direzione Brevetti Piazzale**
**Cadorna, 5**
**I-20123 Milano(IT)**

EP 0 221 449 B1

## Description

The present invention refers to electric cables of the type belonging to the category known as cables that are resistant to flame propagation.

The present invention also refers to a material, which is resistant to flame propagation, intended for forming the coverings of the electric conductors acting as insulation and/or sheath.

In the known cables belonging to the category in question, the conductor covering, carrying out the function of the insulation and/or sheath, is made from a polymeric compound containing mineral charges.

In particular, cables are known having conductor coverings made out of a compound based on copolymers of ethylene, containing magnesium hydroxide as a charge.

Moreover, it is also known that just as the quantity increases of the mineral charges present in the compounds used for forming the coverings of the conductors, so also are the properties, of resistance to flame propagation, improved. However, it is also known that if the quantity of the mineral charges in the compound is increased, then the characteristics of the mechanical-resistance of said latter, also diminishes and precisely, the elongation at rupture, under tensile loads.

Seeing that, for any conductor covering (insulation, and/or sheath), there are simultaneously required optimal values for the characteristics of resistance to flame propagation, as well as of elongation at rupture under tensile loads, in the known cables it is necessary to have recourse to a compromise that, as such, prevents having any optimal values simultaneously, for both types of characteristics.

Endeavours made, for carrying out superficial treatments of the mineral charges for thus increasing the introduceable quantity of the same into a compound without reducing the mechanical characteristic of elongation at rupture under tensile loads, did not produce any satisfactory results.

The aim of the present invention is to realize cables where the conductor covering that acts as an insulation and/or a sheath, simultaneously presents optimal flame propagation characteristics, and optimal mechanical characteristics for the elongation at rupture under tensile loads.

Another aim of the present invention, are the compounds for forming the coverings of conductors acting as insulations and/or sheaths where both, the resistance to flame propagation, as well as the elongation at rupture under tensile loads, prove to be optimal.

What forms the object of the present invention, is an electric cable comprising a conductor and a covering acting as insulation and/or sheath, made out of a compound, based on an ethylene copolymer containing magnesium hydroxide, characterized by the fact that at least 80% of the magnesium hydroxide, present in the compound, has the shape of hexagonal crystalline platelets whose average diameter measured through an electronic microscope, is comprised between 0,1 and 2 $\mu$m.

The object of the present invention is also a material for forming conductor coverings acting as insulation and/or sheath, consisting of a compound, based on an ethylene copolymer containing magnesium hydroxide, characterized by the fact that at least 80% of the magnesium hydroxide present in the compound, has the form of small hexagonal crystalline platelets having an average diameter, measured through an electronic microscope, comprised between 0.1 and 2 $\mu$m.

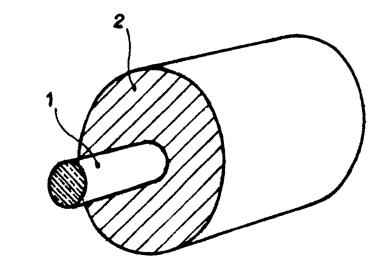

The present invention will be better understood from the following detailed description, made solely by way of nonlimiting example, with referring to the figure of the attached drawing table, where a perspective view with parts removed is shown, of a cable length according to the invention.

The cable illustrated in the figure, presents a conductor 1 with a section of 1.5 mm$^2$ surrounded by a covering 2 having a thickness of 0.8 mm, that acts at the same time, as an insulation and a sheath made of a polymeric compound, whose fundamental characteristics will be given further on.

The conductor 1 is formed by a single metallic wire, for example, of copper, or else, by a plurality of laid-up wires made of the same material.

The covering 2, formed through extrusion around the conductor 1, is of a compound based on an ethylene copolymer, for example, polyethylene-vinyl-acetate, polyethylene-methyl-acrylate, or their mixtures, that contain magnesium hydroxide.

For the purpose of the present invention, the essential characteristics of the compound with which the covering 2 is formed and hence, of said covering, is that at least 80% of the magnesium hydroxide incorporated into it has the form of small crystalline hexagonal platelets, having an average diameter, measured through an electronic microscope, comprised between 0,1 and 2 $\mu$m, and preferably, between 0,7 and 1,3 $\mu$m.

In this test, by the term 'average diameter of the hexagonal platelets' measured through an electronic microscope, is intended the value obtained according to the Standards ASTM E112-77 (Heyn method) of the average dimension of particles in photographs, taken on the electronic microscope, with a magnification of from 10.000 to 20.000 times, of the samples prepared through evaporation on a support with starting

2

from suspensions, of magnesium hydroxide powder in isopropyl alcohol, homogenized by ultra-audible vibrations.

Moreover, the quantity of magnesium hydroxide, incorporated in the compound, is comprised by 50 to 300 parts by weight, with respect to 100 parts by weight of the base polymer of the compound itself.

The particular above-described cable, given by way of example, has not to be taken in any limited sense since, within the ambit of the present invention, there are also included those cables whose conductor is surrounded by a first covering made of a polymeric compound, acting as an insulation that, in its turn, is surrounded by a second covering, acting as a sheath and wherein at least one of the two coverings, is made of a compound having the previously mentioned essential characteristics.

The experimental tests specified herebelow, show that it is only by forming conductor coverings with compounds based on ethylene copolymers, incorporating the particular type of magnesium hydroxide (defined hereabove), is it made possible to simultaneously optimize the properties of resistance to flames, and of elongation at rupture under tensile loads.

The tests that demonstrate what is given hereabove, are as follows.

For determining the resistance to flames, the experimental test used is the one according to Standard ASTM D-2863-70 which allows for obtaining the "oxygen index" representing the minimum quantity of oxygen, in a mixture of oxygen and nitrogen, required for maintaining the combustion of the test sample of the compound under examination.

For determining the mechanical characteristics, the experimental tests used, are those meant for determining the breaking tensile load and the elongation at rupture under tensile load according the Standards CEI 20.11, effectuated on tubular test samples of the compounds, taken directly from the cable by extracting the conductor from the same. The experimental tests were carried out on two samples ( A and B , of compounds according to the invention, and on four samples ( C , D , E , and F ) of compounds for comparison.

SAMPLE A - according to the invention

The compound of this sample has the following recipe:
Ethylene-vinyl-acetate copolymer ...... 100 parts by weight
Crystalline magnesium hydroxide powder
formed by 100% of hexagonal platelets having
an average diameter (measured through an
electronic microscope) of 1,0 $\mu$m ... 180 parts by weight Polymeric hydroxyquinoline antioxidizer . 1 parts
by weight Cross-linking agent (di-cumyl-peroxide) . 2 parts by weight

SAMPLE B - according to the invention

The compound of this sample, has a recipe that differs from the one of SAMPLE A, only in that the crystalline magnesium hydroxide powder made of 100% hexagonal platelets having an average diameter of 1,0 $\mu$m, measured through an electronic microscope, is in a quantity equal to 100 parts by weight.

SAMPLE C - for comparison purposes

The compound of this sample has a recipe that differs from that of SAMPLE A, solely because of the fact that the magnesium hydroxide, incorporated into it, consists of needlelike crystals.

SAMPLE D - for comparison purposes

The compound of this sample has a recipe that differs to that of SAMPLE B, solely owing to the fact that the magnesium hydroxide powder, incorporated into it, consists of needlelike crystals.

SAMPLE E - for comparison purposes

3

The compound of this sample has a recipe that differs from that of SAMPLE A - solely because of the fact that the magnesium hydroxide powder, incorporated into it, consists of irregular-shaped granules.

S AMPLE F - for comparison purposes

The compound of this sample has a recipe that differs from that of SAMPLE B - solely because of the fact that the magnesium hydroxide powder incorporated into it, consists of irregular-shaped granules.

The three types of magnesium hydroxide powders utilized for realizing the above-described samples of compounds, have "specific surface" values and "average equivalent diameter" values, in the same order of magnitude. In fact, as far as concerns the "specific surface" that was determined by the nitrogen absorption measured with the BET method and defined under Standards ASTM 819 °(1981) the values are as follows:

$$\text{Specific Surface}$$

Crystalline magnesium hydroxide powder -

formed by hexagonal platelets ............... 12 m$^2$/gr.

Magnesium hydroxide powder - under the form of needlelike crystals .............. 10 m$^2$/gr.

Magnesium hydroxide powder - formed by irregular-shaped granules .............. 15 m$^2$/gr.

As far as concerns the "average equivalent diameter" this expresses the value obtained through the following formula:

$$dm = \frac{6}{Ssp \ \times \ g}$$

where:

Ssp - is the specific surface of the magnesium hydroxide powder;

g - is the density of the magnesium hydroxide;

dm - is the "average equivalent diameter" that represents the diameter of an ideal spherical particle, under the hypothesis that, at parity of specific surface, the entire powder is formed by spherical particles.

The values obtained of the average equivalent diameter are as follows:

- Crystalline magnesium hydroxide powder formed by small hexagonal platelets ......... 0,21 $\mu$m

- Magnesium hydroxide powder - under the form of needlelike crystals ............................ 0,25 $\mu$m

- Magnesium hydroxide powder - formed by irregular-shaped granules ............................... 0,17 $\mu$m

The experimental tests results are given in the TABLE below.

4

| SAMPLES | OXYGEN INDEX | BREAKING LOAD in megaspascal UNDER TENSILE STRESS | ELONGATION AT RUPTURE – UNDER TENSILE LOADS % |
|---------|--------------|---------------------------------------------------|------------------------------------------------|
| A | 45 | 12 | 200 |
| B | 33 | 15 | 300 |
| C | 42 | 15 | 15 |
| D | 29 | 17 | 20 |
| E | 35 | 10 | 50 |
| F | 26 | 13 | 70 |

By examining the results of the experimental tests given in the above TABLE, the following considerations can be made.

Among all the samples, only those of A and B , that are concerned with compounds, according to the invention, simultaneously present high values for the oxygen-index, and high values for the elongation at rupture under tensile loads.

The other samples, C , D , E and F , although presenting good oxygen-index values and values, in the same order of magnitude, for the breaking load under tensile stress, possess very low values as far as regards the elongation at rupture under tensile loads.

The differences in these results, are solely due to the differences existing in the shape of the particles of the magnesium hydroxide powders used, since, in the three types of magnesium hydroxide powders, the "specific surface" and the "average equivalent diameter" have values in the same order of magnitude.

From the above it issues that it is only by utilizing crystalline magnesium hydroxide powders under the form of hexagonal platelets, is it possible to solve the problem of increasing the quantity of mineral charges introducible into a a compond, for obtaining high oxygen index values and hence, a high resistance to flame propagation, without undergoing any loss in the characteristics of elongation at rupture under tensile loads and hence, no loss in the mechanical characteristics.

This also means that cables according to the invention, wherein the conductor's covering, acting as an insulation and/or sheath, is made with a compound according to the invention, simultaneously presents a good resistance to flame propagation and good mechanical characteristics.

Although only some embodiments, according to the invention, have been illustrated and described, what is understood as comprised within the ambit of the present application, are any other alternative embodiments that are accessible to a technician skilled in the field.

## Claims

1. Electric cable, comprising a conductor (1) and a covering (2) acting as insulation and/or sheath, made from a compound based on an ethylene copolymer containing magnesium hydroxide, characterized by the fact that at least 80% of the magnesium hydroxide, present in the compound, has the shape of hexagonal crystalline platelets whose average diameter, measured through an electronic microscope, is comprised between 0,1 and 2 $\mu$m.

2. Cable, according to CLAIM 1, characterized by the fact that the average diameter, measured through an electronic microscope, of the hexagonal platelets, is preferably comprised between 0,7 and 1,3 $\mu$m.

3. Cable, according to CLAIM 1, characterized by the fact that the magnesium hydroxide is present in the compound in a quantity comprised between 50 and 300 parts by weight with respect to 100 parts by weight of the base copolymer in the compound.

4. Material, for forming conductor-coverings acting as insulation and/or sheath, consisting of a compound, based on an ethylene copolymer, containing magnesium hydroxide, characterized by the fact that at least 80% of the magnesium hydroxide, which is present in the compound, has the shape of small hexagonal crystalline platelets having an average diameter measured through an electronic microscope comprised between 0,1 and 2 $\mu$m.

5. Material, according to CLAIM 4, characterized by the fact that the average diameter, measured through an electronic microscope, of the hexagonal platelets, is preferably comprised between 0,7 and 1,3 $\mu$m.

6. Material, according to CLAIM 4, characterized by the fact that the magnesium hydroxide is present in the compound, in a quantity comprised between 50 and 300 parts by weight, with respect to 100 parts by weight of the base copolymer in the compound.

## Revendications

1. Câble électrique comprenant un conducteur (1) et un enrobage (2) jouant le rôle d'isolant et/ou de gaine, fait d'un composé à base d'un copolymère d'éthylène contenant de l'hydroxyde de magnésium, caractérisé par le fait qu'une proportion d'au moins 80% de l'hydroxyde de magnésium présent dans le composé possède la forme de plaquettes cristallines hexagonales dont le diamètre moyen, mesuré au microscope électronique, est compris entre 0,1 et 2 $\mu$m.

2. Câble selon la revendication 1, caractérisé en ce que le diamètre moyen, mesuré au microscope électronique, des plaquettes hexagonales, est de préférence compris entre 0,7 et 1,3 $\mu$m.

3. Câble selon la revendication 1, caractérisé en ce que l'hydroxyde de magnésium est présent dans le composé en une quantité comprise entre 50 et 300 parties en poids, pour 100 parties en poids du copolymère de base contenu dans le composé.

4. Matière pour la formation d'enrobages de conducteurs jouant le rôle d'isolant et/ou de gaine, constituée par un composé à base de copolymère d'éthylène qui contient de l'hydroxyde de magnésium, caractérisée en ce qu'une proportion d'au moins 80% de l'hydroxyde de magnésium qui est présent dans le composé possède la forme de petites plaquettes cristallines hexagonales possédant un diamètre moyen, mesuré au microscope électronique, compris entre 0,1 et 2 $\mu$m.

5. Matière selon la revendication 4, caractérisée en ce que le diamètre moyen, mesuré au microscope électronique, des plaquettes hexagonales, est de préférence compris entre 0,7 et 1,3 $\mu$m.

6. Matière selon la revendication 4, caractérisée en ce que l'hydroxyde de magnésium est présent dans le composé en une quantité comprise entre 50 et 300 parties en poids, pour 100 parties en poids du copolymère de base contenu dans le composé.

## Ansprüche

1. Elektrisches Kabel, umfassend einen Leiter (1) und einen Überzug (2), der als Isolierung und/oder Mantel wirkt und aus einer Masse gebildet ist auf der Basis eines Äthylencopolymers, welches Magnesiumhydroxid enthält, dadurch **gekennzeichnet** , daß wenigstens 80% des in der Masse vorhandenen Magnesiumhydroxids die Gestalt von hexagonalen kristallinen Plättchen hat, deren mittlerer Durchmesser, gemessen mittels eines Elektronenmikroskops, zwischen 0,1 und 2 $\mu$m liegt.

2. Kabel nach Anspruch 1, dadurch gekennzeichnet, daß der mittlere Durchmesser, gemessen mittels eines Elektronenmikroskops, der hexagonalen Plättchen, vorzugsweise zwischen 0,7 und 1,3 $\mu$m liegt.

3. Kabel nach Anspruch 1, dadurch gekennzeichnet, daß das Magnesiumhydroxid in der Masse in einer Menge zwischen 50 und 300 Gewichtsteilen in bezug auf 100 Gewichtsteile des Basiscopolymers in der Masse vorhanden ist.

4. Material zum Bilden von Leiterüberzügen, die als Isolierung und/oder Mantel wirken, bestehend aus einer Masse auf der Basis eines Äthylencopolymers, welches Magnesiumhydroxid enthält, dadurch gekennzeichnet, daß wenigstens 80% des in der Masse vorhandenen Magnesiumhydroxids die Gestalt von kleinen hexagonalen kristallinen Plättchen hat, die einen mittleren Durchmesser, gemessen mittels eines Elektronenmikroskops, haben, der zwischen 0,1 und 2 $\mu$m liegt.

5. Material nach Anspruch 4, dadurch gekennzeichnet, daß der mittlere Durchmesser, gemessen mittels eines Elektronenmikroskops, der hexagonalen Plättchen vorzugsweise zwischen 0,7 und 1,3 $\mu$m liegt.

6. Material nach Anspruch 4, dadurch gekennzeichnet, daß das Magnesiumhydroxid in der Masse in einer Menge zwischen 50 und 300 Gewichtsteilen in bezug auf 100 Gewichtsteile des Basiscopolymers in der Masse vorhanden ist.